# EUROPÄISCHE PATENTSCHRIFT

(11) **EP 4 098 532 B1**
(45) Veröffentlichungstag und Bekanntmachung des Hinweises auf die Patenterteilung: **25.06.2025**
(21) Anmeldenummer: 22174079.8
(22) Anmeldetag: 18.05.2022
(51) Int. Cl.: B62K 19/36, F16J 3/04

(54) **FAHRRADRAHMEN-DICHTEINRICHTUNG**
BICYCLE FRAME SEALING DEVICE
DISPOSITIF D'ÉTANCHÉITÉ POUR CADRE DE BICYCLETTE

(30) Priorität: 31.05.2021 DE 202021102958 U
(43) Veröffentlichungstag der Anmeldung: 07.12.2022
(73) Patentinhaber: Canyon Bicycles GmbH, 56073 Koblenz (DE)
(72) Erfinder: Sommer, Nils, 53173 Bonn (DE); Thoma, Vincenz, 87538 Obermaiselstein (DE)
(74) Vertreter: dompatent von Kreisler Selting Werner - Partnerschaft von Patent- und Rechtsanwälten mbB

(56) Entgegenhaltungen:
- WO-A1-2011/046252
- JP-U- S50 147 358
- JP-U- S6 047 688
- US-B1- 6 176 476
- US-B1- 6 837 507
- BENSON CORY: "BikeYoke wants to Squeezy your dropper, wrap your Willy & flip a longer Triggy X - Bikerumor", BIKERUMOR!, 31 December 2018 (2018-12-31), bikerumor.com, XP055973816, Retrieved from the Internet <URL:https://bikerumor.com/bikeyoke-wants-to-squeezy-your-dropper-wrap-your-willy-flip-a-longer-triggy-x/> [retrieved on 20221021]

## Beschreibung

Die Erfindung betrifft eine Fahrradrahmen-Dichteinrichtung.

Fahrradrahmen weisen ein Sitzrohr oder Sattelrohr auf, dass mit dem den Sattel tragenden Sattelstützrohr verbunden ist. Üblicherweise weist das Sattelrohr an seiner oberen Seite eine Öffnung auf, in die das Sattelstützrohr eingesteckt ist. Die Fixierung erfolgt üblicherweise durch ein Klemmelement, beispielsweise eine das Sattelrohr umgebene Klemmschelle. Es sind auch andere, beispielsweise durch eine am Sattelrohr vorgesehene Madenschraube erfolgende Klemmeinrichtungen bekannt. Zwischen dem Sattelstützrohr und dem Sattelrohr treten bei Belastung Relativbewegungen auf. Diese Relativbewegungen führen mit der Zeit zu Abrieb zwischen dem Sattelstützrohr und dem Sattelrohr. Das Eindringen von Schmutzpartikeln in diesem Bereich beschleunigt den auftretenden Abrieb um ein Vielfaches. Hierdurch können erhebliche Beschädigungen des Sattelrohrs und/oder des Sattelstützrohrs auftreten. Auch kann in diesem Bereich Wasser eindringen, dass dazu führt, dass Schmierstoffe ausgespült werden.

Um das Eindringen von Schmutzpartikeln oder Schmutzwasser zu verringern, ist es bekannt in diesem Bereich Dichtungen vorzusehen. Beispielsweise ist es bekannt ein ringförmiges Element, wie ein Insert zwischen dem Sattelrohr und dem Sattelstützrohr anzuordnen, wobei dies eine flexible Dichtlippe aufweist, die an dem Sattelstützrohr anliegt. Ferner ist es bekannt, zwischen dem Sattelrohr und dem Sattelstützrohr Gummiringe als Dichtung anzuordnen. Aufgrund der in der Praxis auftretenden großen Relativbewegungen zwischen dem Sattelstützrohr und dem Sattelrohr ist die Dichtwirkung bekannter Dichtungen jedoch relativ schlecht, sodass die durch den Abrieb hervorgerufenen Beschädigungen weiterhin relativ groß sind. Insbesondere bei unrunden, aerodynamisch optimierten Rohrprofilen ist die Dichtwirkung bekannter Dichtungen sehr schlecht.

Aus der gattungsgemäßen Internetveröffentlichung Beson Cory: "BikeYoke wants to Squeezy your dropper, wrar your Willy & flip a longer Triggy X -Bikerumor" ist ein schlauchartiges Element bekannt, dass in den Bereich, in dem das Sattelstützrohr im Sattelrohr des Rahmens angeordnet ist, gestülpt werden kann, sodass eine gewisse Abdichtung in diesem Bereich erfolgt.

Aufgabe der Erfindung ist es, eine Fahrradrahmen-Dichteinrichtung zu schaffen, mit der ein Abdichten zwischen dem Sattelrohr und dem Sattelstützroh verbessert ist.

Die Lösung der Aufgabe erfolgt durch eine Fahrradrahmen-Dichteinrichtung mit den Merkmalen des Anspruchs 1.

Die erfindungsgemäße Fahrradrahmen-Dichteinrichtung weist ein rahmenseitiges Dichtelement auf, das abdichtend mit dem Sattelrohr eines Fahrradrahmens verbindbar ist. Hierbei kann die Verbindung des rahmenseitigen Dichtelements mittelbar oder unmittelbar mit dem Sattelrohr erfolgen. Ferner weist die erfindungsgemäße Fahrradrahmen-Dichteinrichtung ein sattelseitiges Dichtelement auf. Bei dem sattelseitigen Dichtelement handelt es sich um das in Richtung des Sattels weisenden Dichtelements. Dieses Dichtelement ist abdichtend mit einem Sattelstützrohr, d.h. dem den Sattel tragenden Rohrelement verbunden. Auch hier ist es wiederum möglich eine unmittelbare oder mittelbare Verbindung zu realisieren.

Erfindungsgemäß sind die beiden Dichtelemente über ein flexibles Verbindungselement miteinander verbunden. Erfindungswesentlich können somit die beiden Dichtelemente rahmenseitig bzw. sattelseitig mittelbar oder unmittelbar mit dem Sattelrohr bzw. dem Sattelstützrohr verbunden werden. Hierbei kann eine feste und somit dichte Verbindung realisiert werden. Durch die Verbindung der beiden Dichtelemente mittels eines flexiblen Verbindungselements können Relativbewegungen, die zwischen den beiden Dichtelementen auftreten ausgeglichen werden. Relativbewegungen zwischen den beiden Dichtelementen, bzw. Relativbewegungen zwischen dem Sattelrohr und dem Sattelstützrohr beeinträchtigen somit nicht die Dichtewirkung, da die Relativbewegung, aufgrund des flexiblen Verbindungselements, möglich sind. Insbesondere erfolgt durch das erfindungsgemäße flexible Verbindungselement ein Endkoppeln der beiden Dichtelemente, sodass diese jeweils der Bewegung des entsprechenden Kontaktpartners d.h. dem Sattelrohr bzw. dem Sattelstützrohr folgen können. Vorteilhaft ist erfindungsgemäß daher insbesondere, dass zwischen den Dichtflächen der Dichtelemente und denen der Kontaktpartner insbesondere keine Relativbewegungen auftreten. Relativbewegungen bewirken somit beispielsweise nicht ein Trennen von aneinander anliegenden Dichtflächen und bewirken somit keine Undichtigkeit.

Erfindungsgemäß erfolgt somit eine Entkopplung derart, dass Relativbewegungen zwischen dem Sattelrohr und dem Sattelstützrohr, bzw. den mit diesen verbundenen Dichtelementen, zulässig sind, bzw. das Auftreten derartiger Relativbewegungen nicht zu einer Undichtigkeit führt, da das Sattelrohr vom Sattelstützrohr, bezogen auf das Dichtelement entkoppelt ist. Es treten somit keine oder allenfalls äußerst geringe Relativbewegungen an Dichtflächen auf. Dies verbessert die Dichtwirkung sehr stark.

Insbesondere ist es möglich, dass das Verbindungselement mit dem rahmenseitigen und/oder dem sattelstützrohrseitigen Dichtelement abdichtend, insbesondere fest verbunden ist. Eine feste Verbindung ist insofern möglich, da die Flexibilität durch das Verbindungselement selbst realisiert werden kann. Besonders bevorzugt ist es, dass das Verbindungselement als Faltenbalg ausgebildet ist.

Das rahmenseitige oder das sattelstützrohrseitige Dichtelement ist vorzugsweise ringförmig ausgebildet. Insbesondere umgeben die Dichtelemente somit das Sattelrohr bzw. das Sattelstützrohr entsprechend eines Rings vollständig, wobei es sich je nach Geometrie, beispielsweise um einen oval, runden oder eine andere Form aufweisenden Ring handeln kann. Durch eine ringförmige Ausgestaltung ist es insbesondere möglich das Dichtelement derart auszugestalten, dass es an einer umlaufenden Dichtfläche anliegt. Da erfindungsgemäß in diesem Bereich keine oder allenfalls geringe Relativbewegungen auftreten, kann eine sehr gute Dichtigkeit erzielt werden.

Vorzugsweise ist mit dem Sattelrohr eine insbesondere ringförmig umlaufende Wulst verbunden. Die Verbindung kann wiederum mittelbar oder unmittelbar erfolgen, wobei die Wulst beispielsweise durch ein Zwischenelement ausgebildet ist. Ebenso kann die Wulst direkt in das Sattelrohr intrigiert und insbesondere einstückig mit diesem ausgebildet sein. Die Wulst wird in bevorzugterer Ausführungsform von dem rahmenseitigen Dichtelement umgriffen. Insbesondere bei einer ringförmig umlaufenden Wulst, die auch ringförmig umgriffen wird, ist eine sehr gute Verbindung zwischen der Wulst und dem rahmenseitigen Dichtelement möglich. Aufgrund des durch die Wulst ausgebildeten Hinterschnitts ist eine sehr gute Dichtwirkung realisierbar.

Erfindungsgemäß ist das rahmenseitige Dichtelement über ein Zwischenelement, das mit einem zylindrischen, insbesondere kreiszylindrischen Ansatz aufweist, mit dem Sattelrohr verbunden. Dieses Zwischenelement kann die insbesondere umlaufende Wulst aufweisen. Ferner ist es bevorzugt, dass das Zwischenelement rotationssymmetrisch ausgebildet ist. Das Zwischenelement weist einen zylindrischen Ansatz auf, der in montiertem Zustand in das Sattelrohr ragt. Zur Montage kann somit das Zwischenelement in das Rahmenrohr eingesteckt werden und das Sattelstützrohr wird sodann in das Zwischenelement eingesteckt. Dies hat insbesondere den Vorteil, dass die erfindungsgemäße Fahrradrahmen-Dichteinrichtung auf einfache Weise nachgerüstet werden kann, da eine konstruktive Veränderung des Sattelrohrs nicht erforderlich ist.

In besonders bevorzugter Ausführungsform ist auch das Verbindungselement rotationssymmetrisch bzw. ringförmig ausgebildet.

Alternativ, insbesondere bei aerodynamisch ausgebildeten Sattelrohren und Sattelstützrohren weist auch die erfindungsgemäße Fahrradrahmen-Dichteinrichtung eine entsprechende aerodynamische Form auf. Die Form der erfindungsgemäßen Fahrradrahmen-Dichteinrichtung entspricht vorzugsweise der Form der Kontur des Sattelrohrs und/oder des Sattelstützrohrs.

Bei einer bevorzugten Weiterbildung der Fahrradrahmen-Dichteinrichtung weist das sattelstützrohrseitige Dichtelement eine Innenfläche auf, die zu einer Außenfläche des Sattelstützrohrs komplementär ausgebildet ist. Hierdurch ist die Verbesserung der Dichtwirkung sichergestellt, dass die beiden Flächen in montiertem Zustand flächig und somit dichtend aneinander anliegen. Entsprechende Dichtflächen können auch zwischen dem rahmenseitigen Dichtelement und dem Sattelrohr vorgesehen sein.

Bei einer weiter bevorzugten Weiterbildung der erfindungsgemäßen Fahrradrahmen-Dichteinrichtung können in dem rahmenseitigen Dichtelement und/oder dem sattelstützrohrseitigen Dichtelement und/oder dem Verbindungselement Ausnehmungen zur Aufnahme von Dichtmittel bzw. Schmiermittel vorgesehen sein. Hierdurch kann die Dichtigkeit weiter verbessert werden und insbesondere das Auftreten von Geräuschen aufgrund der Relativbewegungen vermieden werden. Insbesondere zur Verbesserung der Dichtwirkung können die Ausnehmungen insbesondere als umlaufende Nuten ausgebildet sein.

Des Weiteren ist es möglich, dass das Verbindungselement mindestens eine Druckausgleichsöffnung aufweist. Hierbei handelt es sich um mindestens eine Öffnung mit vorzugsweise sehr kleinem Durchmesser, um bei der Bewegung auftretende Druckunterschiede auszugleichen. Hierdurch ist sichergestellt, dass ein entsprechender Druckausgleich nicht über die Dichtflächen erfolgt.

Des Weiteren betrifft die Erfindung ein Fahrradrahmensystem. Das Fahrradrahmensystem weist einen Fahrradrahmen mit einem Sattelrohr auf. Des Weiteren kann der Fahrradrahmen ein Oberrohr und/oder ein Unterrohr aufweisen. Je nach Ausgestaltung des Fahrradrahmens kann dieser einen Hinterbau aufweisen oder gelenkig mit einem Hinterbau verbunden sein. Die Ausgestaltung des Fahrradrahmens kann hierbei bekannte unterschiedliche Geometrien aufweisen. Mit dem Sattelrohr des Fahrradrahmens ist ein Sattelstützrohr durch Einstecken verbunden. Zwischen dem Sattelrohr und dem Sattelstützrohr ist zur Abdichtung eine Fahrradrahmen-Dichteinrichtung, wie vorstehend beschrieben, angeordnet.

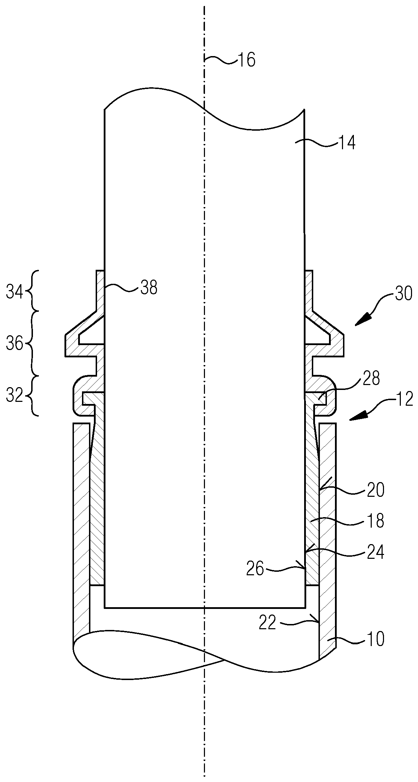

Nachfolgend wird die Erfindung anhand einer bevorzugten Ausführungsform unter Bezugnahme auf die anliegende Zeichnung näher erläutert:
Die Figur zeigt eine schematische Schnittansicht einer bevorzugten Ausführungsform einer erfindungsgemäßen Fahrradrahmen-Dichteinrichtung.

In der Figur ist schematisch ein oberes Ende eines Sattelrohrs 10 eines Fahrradrahmens dargestellt. Der Fahrradrahmen weist üblicherweise ein mit dem Sattelrohr 10 verbundenes Oberrohr sowie ein Unterrohr auf. Ferner kann zur Aufnahme einer Vorderradgabel ein Gabelrohr Teil des Fahrradrahmens, sowie auch eine Tretlageraufnahme Teil des Fahrradrahmens sein. Ferner kann mit dem Fahrradrahmen ein Hinterbau steif oder schwenkbar verbunden sein, wobei der Hinterbau üblicherweise Kettenstreben und Sattelstreben aufweist.

Für die Erfindung relevant ist das Sattelrohr 10, mit einer im Wesentlichen nach oben weisenden Öffnung 12. In der Öffnung 12 ist ein Sattelstützrohr 14 angeordnet, dass an seinem oberen in der Figur nicht dargestellten Ende mit einem Sattel verbunden ist bzw. einen Sattel trägt. Das in der Figur untere Ende des Sattelstützrohrs 14 ist innerhalb des Sattelrohrs 10 angeordnet. Das Sattelstützrohr 14 ist üblicherweise über eine nicht dargestellte Klemmeinrichtung im Sattelrohr 10 klemmend fixiert. Bei einer einfachen Art der Klemmeinrichtung handelt es sich um eine das Sattelrohr 10 umgebende Schelle. Auch kann zur Klemmung im Sattelrohr 10 beispielsweise eine Madenschraube angeordnet sein, die auf ein Klemmmittel einwirkt, das beispielsweise innerhalb des Sattelrohrs 10 angeordnet ist und somit das Sattelstützrohr 14 klemmend im Sattelrohr 10 fixiert.

Im dargestellten Ausführungsbeispiel ist in der Öffnung 12 des Sattelrohrs 10 ein insbesondere zu einer Längsachse 16 rotationssymmetrisch ausgebildetes Zwischenelement 18 angeordnet. Ebenso ist eine aerodynamisch optimierte Außenkontur möglich. Das Zwischenelement 18 weist eine Außenseite 20 auf, die komplementär zu einer Innenseite 22 des Sattelrohrs 10 ist, sodass die Außenseite 20 des Zwischenelements 18 an der Innenseite 22 des Sattelrohrs 10 flächig anliegt, vorzugsweise verklebt ist. Ebenso kann das Sattelrohr eine unrunde Kontur, wie beispielsweise eine ovale Kontur aufweisen, wobei das Zwischenelement sodann die entsprechende Kontur aufweist. Dies gilt auch für den Querschnitt des Sattelstützrohrs 14.

Das Sattelstützrohr 14 ist in das in dem Sattelrohr 10 angeordnete Zwischenelement 18 eingesteckt, sodass wiederum eine Außenseite 24 des Sattelstützrohrs 14 flächig an einer Innenseite 26 des Zwischenelements 18 anliegt.

Das Zwischenelement 18 weist an dem außerhalb des Sattelrohrs 10 angeordneten Ende eine umlaufende Wulst 28 auf. Im dargestellten Ausführungsbeispiel ist mit der Wulst 28 des Zwischenelements 18 die erfindungsgemäße Fahrradrahmen-Dichteinrichtung 30 verbunden. Alternativ könnte die Fahrradrahmen-Dichteinrichtung 30 auch unmittelbar mit dem Sattelrohr 10 verbunden sein.

Die Fahrradrahmen-Dichteinrichtung 30 weist ein rahmenseitiges Dichtelement 32, sowie ein sattelstützrohrseitiges Dichtelement 34 auf. Die beiden Dichtelemente sind über ein Verbindungselement 36 miteinander verbunden. Im dargestellten Ausführungsbeispiel sind die beiden Dichtelemente 32, 34 sowie das Verbindungselement 36 einstückig ausgebildet. Das rahmenseitige Dichtelement 32 ist im dargestellten Ausführungsbeispiel fest mit dem Zwischenelement 18 verbunden. Die Verbindung erfolgt über die Wulst 28, die von dem rahmenseitigen Dichtelement 32 umgriffen ist. Hierdurch ist eine sehr dichte Verbindung zwischen dem rahmenseitigen Dichtelement 32 und dem Zwischenelement 18 verwirklicht.

Das sattelstützrohrseitige Dichtelement 34 ist im dargestellten Ausführungsbeispiel ringförmig ausgebildet und umgibt das Sattelstützrohr 14. Hierbei liegt eine Innenseite 38 des sattelstützrohrseitigen Dichtelements 34 flächig der Außenseite 24 des Sattelstützrohrs 14 an. Auch hier kann eine feste Verbindung, beispielsweise durch Reibschluss hergestellt sein, sodass auch dieser Bereich eine hohe Dichtigkeit aufweist. Auch kann hier beispielsweise ein die Dichtwirkung verbessernder Metallring, Klemmring oder dergleichen vorgesehen sein.

Erfindungsgemäß sind die beiden Dichtelemente 32, 34, die fest mit dem Zwischenelement 18 bzw. dem Sattelstützrohr 14 verbunden sind, über ein Verbindungselement 36 flexibel miteinander verbunden. Das Verbindungselement 36, das beispielsweise aus einem weicheren elastischen Kunststoff hergestellt sein kann und/oder eine geringere Dicke aufweisen kann, dient einerseits zu einer dichten Verbindung der beiden Dichtelemente 32, 34 und stellt andererseits eine flexible Verbindung her. Hierdurch ist gewährleistet, dass auftretende Relativbewegungen zwischen den beiden Dichtelementen 32, 34 nicht zu einer Verringerung der Dichtigkeit führen, da in die beiden Dichtelemente nur flexibel und nicht starr oder fest miteinander verbunden sind. Da Relativbewegungen zwischen den beiden Dichtelementen 32, 34 möglich sind, ohne die Dichtigkeit zu verschlechtern, führen auch auftretende Relativbewegungen zwischen dem Sattelrohr 10 und dem Sattelstützrohr 14 nicht zu Bewegungen zwischen den Dichtelementen 32, 34 und ihren Kontaktpartnern 10, 14. Dadurch wird die Abdichtung auch bei Relativbewegungen zwischen Sattelstützrohr 14 und Sattelrohr 10 gewährleistet.

In nicht dargestellten Ausnehmungen der Dichtelemente 32 und/oder 34 und/oder des Verbindungselement 36 können Dicht- oder Schmiermittel vorgesehen sein. Ferner kann das Verbindungselement 36 vorzugsweise nicht dargestellte Druckausgleichsöffnungen auf.

Die Bauteile, die in der dargestellten Figur zur Achse 16 rotationssymmetrisch sind, können auch andere Geometrien aufweisen, wobei stets relevant ist, dass die entsprechenden Dichtflächen dichtend aneinander anliegen und die Geometrien insofern komplementär zueinander ausgebildet sind. Ferner kann das Zwischenelement 18 auch entfallen. Hierbei ist das rahmenseitige Dichtelement 32 sodann beispielsweise mithilfe eines Klemmelements mit dem Sattelrohr 10 verbunden, insbesondere wird es über die Öffnung 12 des Sattelrohrs 10 gestülpt. Beispielsweise kann das rahmenseitige Dichtelement 32 mit einer Außenseite des Sattelrohrs 10 verklebt sein.

## Patentansprüche

1. Fahrradrahmen-Dichteinrichtung mit
einem rahmenseitigen Dichtelement (32), das abdichtend mit einem Sattelrohr (10) eines Fahrradrahmens verbindbar ist,
einem sattelstützrohrseitig Dichtelement (34), das abdichtend mit einem Sattelstützrohr (14) verbindbar ist und
einem flexiblen zwischen den beiden Dichtelementen (32, 34) angeordnetes Verbindungselement (36),
**dadurch gekennzeichnet, dass**
das rahmenseitige Dichtelement (32) über ein Zwischenelement (18) mit dem Sattelrohr (10) verbunden ist, wobei das Zwischenelement (18) einen zylindrischen, insbesondere kreiszylindrischen Ansatz aufweist, der in montiertem Zustand in das Sattelrohr (10) ragt.

2. Fahrradrahmen-Dichteinrichtung nach Anspruch 1, **dadurch gekennzeichnet, dass** das Verbindungselement (36) mit dem rahmenseitigen und/oder dem sattelstützrohrseitigen Dichtelement (32, 34) abdichtend, insbesondere fest, verbunden ist.

3. Fahrradrahmen-Dichteinrichtung nach einem der Ansprüche 1 oder 2, **dadurch gekennzeichnet, dass** das rahmenseitige und/oder sattelstützrohrseitige Dichtelement (32, 34) ringförmig ausgebildet ist.

4. Fahrradrahmen-Dichteinrichtung nach einem der Ansprüche 1 bis 3, **gekennzeichnet durch** einen mit dem Sattelrohr (10) verbundenen, insbesondere ringförmig ausgebildeten Wulst (28), der von dem rahmenseitigen Dichtelement (32) umgriffen wird.

5. Fahrradrahmen-Dichteinrichtung nach Anspruch 4, **dadurch gekennzeichnet, dass** die Wulst (28) am Zwischenelement (18) angeordnet ist.

6. Fahrradrahmen-Dichteinrichtung nach einem der Ansprüche 1 bis 5, **dadurch gekennzeichnet, dass** das Verbindungselement (36) ringförmig ausgebildet ist.

7. Fahrradrahmen-Dichteinrichtung nach einem der Ansprüche 1 bis 6, **dadurch gekennzeichnet, dass** das Verbindungselement (36) als Faltenbalg ausgebildet ist.

8. Fahrradrahmen-Dichteinrichtung nach einem der Ansprüche 1 bis 7, **dadurch gekennzeichnet, dass** das sattelstützrohrseitige Dichtelement (34) eine Innenfläche (38) aufweist, die zu einer Außenfläche (24) des Sattelstützrohrs (14) komplementär ausgebildet ist, sodass die beiden Flächen in montiertem Zustand dicht aneinander anliegen.

9. Fahrradrahmen-Dichteinrichtung nach einem der Ansprüche 1 bis 8, **dadurch gekennzeichnet, dass** im rahmenseitigen Dichtelement (32) und/oder im sattelstützrohrseitigen Dichtelement (34) und/oder im Verbindungselement (36) Ausnehmungen zur Aufnahme von Dichtmittel vorgesehen sind.

10. Fahrradrahmen-Dichteinrichtung nach Anspruch 9, **dadurch gekennzeichnet, dass** die Ausnehmungen, zumindest teilweise, als insbesondere umlaufende Nuten ausgebildet sind.

11. Fahrradrahmen-Dichteinrichtung nach einem der Ansprüche 1 bis 10, **dadurch gekennzeichnet, dass** das Verbindungselement (36) mindestens eine Druckausgleichsöffnung aufweist.

12. Fahrradrahmensystem mit, einem Fahrradrahmen mit einem Sattelrohr (10), eine in das Sattelrohr (10) eingesteckten Sattelstützrohr (14) und einer zwischen dem Sattelrohr (10) und dem Sattelstützrohr (14) angeordneten Fahrradrahmen-Dichteinrichtung nach einem der Ansprüche 1 bis 11.

## Claims

1. A bicycle frame sealing means comprising
a frame-side sealing element (32) adapted to be connected with a saddle tube (10) of a bicycle frame in a sealing manner,
a saddle post-side sealing element (34) adapted to be connected with a saddle post (14) in a sealing manner, and
a flexible connecting element (36) arranged between the two sealing elements (32, 34),
**characterized in that**
the frame-side sealing element (32) is connected with the saddle tube (10) via an intermediate element (18), wherein the intermediate element (18) comprises a cylindrical, in particular circular cylindrical protrusion protruding into the saddle tube (10) when in the mounted state.

2. The bicycle frame sealing means according to claim 1, **characterized in that** the connecting element (36) is sealingly, in particular fixedly, connected with the frame-side and/or the saddle post-side sealing element (32, 34).

3. The bicycle frame sealing means according to any one of claims 1 or 2, **characterized in that** the frame-side and/or saddle post-side sealing element (32, 34) are annular in shape.

4. The bicycle frame sealing means according to any one of claims 1 to 3, **characterized by** an in particular annular bead (28) connected with the saddle tube (10), around which bead the frame-side sealing element (32) engages.

5. The bicycle frame sealing means according to claim 4, **characterized in that** the bead (28) is arranged on the intermediate element (18).

6. The bicycle frame sealing means according to any one of claims 1 to 5, **characterized in that** the connecting element (36) is annular in shape.

7. The bicycle frame sealing means according to any one of claims 1 to 6, **characterized in that** the connecting element (36) is formed as bellows.

8. The bicycle frame sealing means according to any one of claims 1 to 7, **characterized in that** the saddle post-side sealing element (34) has an inner surface (38) formed complementary to an outer surface (24) of the saddle post (14) so that the two surfaces are in sealing contact with each other when in the mounted state.

9. The bicycle frame sealing means according to any one of claims 1 to 8, **characterized in that** recesses for holding sealant are formed in the frame-side sealing element (32) and/or in the saddle post-side sealing element (34) and/or in the connecting element (36).

10. The bicycle frame sealing means according to claim 9, **characterized in that** the recesses are at least in part formed as in particular circumferential grooves.

11. The bicycle frame sealing means according to any one of claims 1 to 10, **characterized in that** the connecting element (36) has at least one pressure compensation opening.

12. A bicycle frame system comprising a bicycle frame with a saddle tube (10), a saddle post (14) inserted into the saddle tube (10), and a bicycle frame sealing means according to one of claims 1 to 11 arranged between the saddle tube (10) and the saddle post (14).

## Revendications

1. Dispositif d'étanchéité pour cadre de bicyclette, comprenant :
un élément d'étanchéité côté cadre (32), qui peut être relié de manière étanche à un tube de selle (10) d'un cadre de bicyclette,
un élément d'étanchéité côté tube (34) de support de selle, qui peut être relié de manière étanche à un tube de support de selle (14), et
un élément de liaison flexible (36) disposé entre les deux éléments d'étanchéité (32, 34),
**caractérisé en ce que**
l'élément d'étanchéité côté cadre (32) est relié au tube de selle (10) via un élément intermédiaire (18), l'élément intermédiaire (18) présentant un embout cylindrique, en particulier cylindrique circulaire, qui pénètre dans le tube de selle (10) à l'état monté.

2. Dispositif d'étanchéité pour cadre de bicyclette selon la revendication 1, **caractérisé en ce que** l'élément de liaison (36) est relié de manière étanche, en particulier de manière fixe, à l'élément d'étanchéité (32, 34) côté cadre et/ou côté tube de support de selle.

3. Dispositif d'étanchéité pour cadre de bicyclette selon l'une des revendications 1 ou 2, **caractérisé en ce que** l'élément d'étanchéité (32, 34) côté cadre et/ou côté tube de support de selle est réalisé en forme d'anneau.

4. Dispositif d'étanchéité pour cadre de bicyclette selon l'une des revendications 1 à 3, **caractérisé par** un bourrelet (28) relié au tube de selle (10), en particulier réalisé en forme d'anneau, qui est entouré par l'élément d'étanchéité côté cadre (32).

5. Dispositif d'étanchéité pour cadre de bicyclette selon la revendication 4, **caractérisé en ce que** le bourrelet (28) est agencé au niveau de l'élément intermédiaire (18).

6. Dispositif d'étanchéité pour cadre de bicyclette selon l'une des revendications 1 à 5, **caractérisé en ce que** l'élément de liaison (36) est réalisé en forme d'anneau.

7. Dispositif d'étanchéité pour cadre de bicyclette selon l'une des revendications 1 à 6, **caractérisé en ce que** l'élément de liaison (36) est réalisé sous la forme d'un soufflet à plis.

8. Dispositif d'étanchéité pour cadre de bicyclette selon l'une des revendications 1 à 7, **caractérisé en ce que** l'élément d'étanchéité côté tube de support de selle (34) présente une surface intérieure (38) qui est réalisée de manière complémentaire par rapport à une surface extérieure (24) du tube de support de selle (14), de sorte que les deux surfaces reposent l'une contre l'autre de manière étanche à l'état monté.

9. Dispositif d'étanchéité pour cadre de bicyclette selon l'une des revendications 1 à 8, **caractérisé en ce que** des évidements pour la réception de garnitures d'étanchéité sont prévues dans l'élément d'étanchéité côté cadre (32) et/ou dans l'élément d'étanchéité côté tube de support de selle (34) et/ou dans l'élément de liaison (36).

10. Dispositif d'étanchéité pour cadre de bicyclette selon la revendication 9, **caractérisé en ce que** les évidements sont réalisés, au moins partiellement, sous la forme de rainures en particulier circonférentielles.

11. Dispositif d'étanchéité pour cadre de bicyclette selon l'une des revendications 1 à 10, **caractérisé en ce que** l'élément de liaison (36) présente une ouverture de compensation de pression.

12. Système de cadre de bicyclette comprenant un cadre de bicyclette avec tube de selle (10), un tube de support de selle (14) inséré dans le tube de selle (10) et un dispositif d'étanchéité pour cadre de bicyclette selon l'une des revendications 1 à 11 agencé entre le tube de selle (10) et le tube de support de selle (14).
